# EUROPEAN PATENT APPLICATION

(11) **EP 4 691 832 A1**
(43) Date of publication of application: **11.02.2026**
(21) Application number: 24779073.6
(22) Date of filing: 01.03.2024
(51) Int. Cl.: B60L 50/53

(54) **WORK VEHICLE**

(30) Priority: 29.03.2023 JP 2023052845
(71) Applicant: Hitachi Construction Machinery Co., Ltd., Tokyo 110-0015 (JP)
(72) Inventor: KIMURA Takuya, Tsuchiura-shi, Ibaraki 300-0013 (JP); KANEZAWA Hiroshi, Tsuchiura-shi, Ibaraki 300-0013 (JP); IKEDA Jun, Tsuchiura-shi, Ibaraki 300-0013 (JP); NAKATE Youhei, Tsuchiura-shi, Ibaraki 300-0013 (JP); SAIJOU Kimihiro, Tsuchiura-shi, Ibaraki 300-0013 (JP); ABE Yuusuke, Tsuchiura-shi, Ibaraki 300-0013 (JP); LI Zhi, Tsuchiura-shi, Ibaraki 300-0013 (JP); KANAYA Yousuke, Tsuchiura-shi, Ibaraki 300-0013 (JP); SUZUKI Shoutarou, Tsuchiura-shi, Ibaraki 300-0013 (JP)
(74) Representative: MERH-IP Matias Erny Reichl Hoffmann Patentanwälte PartG mbB
(86) International application number: PCT/JP2024/007805
(87) International publication number: WO 2024/202935

(57) **Abstract**

Provided is a work vehicle with which it is possible to suppress an increase in the size and weight of a power reception device that supplies power supplied from a trolley overhead wire to a battery and an electric motor, and to improve the efficiency of work including transportation work. A work vehicle (100) comprises a battery control device (140) that controls charging power supplied from a power reception device (110) to a battery (120), a motor control device (150) that controls traveling power supplied from the power reception device (110) to an electric motor (130), and a power control device (160) that calculates allocations of the charging power and the traveling power with respect to received power of the power reception device (110) within a range in which the total of the charging power and the traveling power does not exceed a rated capacity of the power reception device (110) and controls the battery control device (140) and the motor control device (150) such that the allocated powers are supplied from the power reception device (110) to the battery (120) and the electric motor (130).

## Description

### Technical Field

The present disclosure relates to a work vehicle.

### Background Art

Conventionally, there has been known a control device for an autonomous vehicle configured to charge an electric storage device by an external power source during traveling while suppressing deterioration of the electric storage device (see Patent Literature 1 below). In the control device, a controller is configured to detect a charging zone where the electric storage device can be charged by the external power source and restrict at least any one of a charge amount of the electric storage device or a discharge amount from the electric storage device so as to limit a load factor of the electric storage device by charging the electric storage device and discharging from the electric storage device to be equal to or less than a predetermined limit value when the vehicle passes through the charging zone (Abstract and the like of the same Patent Literature).

On the other hand, at work sites such as mines, for example, an electric dump truck equipped with an engine, a generator, and an electric motor is used. The electric dump truck travels by driving the electric motor by the power generated by turning the generator by the engine. In addition, a trolley power-receiving type electric dump truck is also used. The trolley power-receiving type electric dump truck travels by driving an electric motor by the power supplied from a trolley overhead wire in a power receiving zone where the trolley overhead wire is installed and travels by driving the electric motor by the power generated by an engine and a generator in a non-powered zone.

### Citation List

### Patent Literature

Patent Literature 1: JP 2019-187130 A

### Summary of Invention

### Technical Problem

For example, in order to address environmental problems, full electrification, which realizes complete electrification by installing a battery instead of an engine and a generator, is being examined for the conventional trolley power-receiving type electric dump truck described above. A trolley power-receiving type fully electric dump truck causes an electric motor to be driven by the power supplied from a trolley overhead wire while charging a battery in a power receiving zone where the trolley overhead wire is installed and causes the electric motor to be driven by the power charged by the battery in a non-powered zone where the trolley overhead wire is not installed.

The conventional trolley power-receiving type electric dump truck can improve traveling performance more in the power receiving zone by supplying the electric motor with the power generated by the engine and the generator while supplying the electric motor with the power supplied from the trolley overhead wire than in the non-powered zone. However, since the trolley power-receiving type fully electric dump truck requires the battery to be charged in the power receiving zone, the supply of traveling power from the battery to the electric motor is cut off.

Therefore, in the power receiving zone, the trolley power-receiving type fully electric dump truck needs to be supplied with the traveling power, which has been supplied from the battery in a non-charging zone, from the trolley overhead wire and further needs to be supplied with charging power for charging the battery from the trolley overhead wire. Accordingly, in order to improve the traveling performance of the fully electric dump truck more in the power receiving zone than in the non-powered zone, it is necessary to supply not only the traveling power equal to that in the non-powered zone and the charging power for the battery but also additional traveling power from the trolley overhead wire.

As a result, in the trolley power-receiving type fully electric dump truck, the power supplied from the trolley overhead wire to a power reception device significantly increases compared with the conventional trolley power-receiving type electric dump truck, and the rated capacities of electrical devices contained in the power reception device increase, possibly causing the power reception device to increase in size. Such an increase in the size of the power reception device may increase the weight of a work vehicle, such as an electric dump truck, and reduce the efficiency of work, such as transportation work, by the work vehicle.

The present disclosure provides a work vehicle with which it is possible to suppress an increase in the size and weight of a power reception device that supplies power supplied from a trolley overhead wire to a battery and an electric motor and to improve the efficiency of work including transportation work.

### Solution to Problem

A work vehicle according to an aspect of the disclosure includes a power reception device, a battery, an electric motor for traveling, a battery control device, a motor control device, and a power control device. The power reception device is configured to be supplied with power from a trolley overhead wire by being connected to the trolley overhead wire. The battery is configured to be charged by the power supplied from the power reception device. The electric motor for traveling is configured to be driven by power supplied from the power reception device or the battery. The battery control device is configured to perform charge and discharge control of the battery and supply charging power from the power reception device to the battery when the power reception device is connected to the trolley overhead wire. The motor control device is configured to perform driving control of the electric motor and supply traveling power from the power reception device to the electric motor when the power reception device is connected to the trolley overhead wire. The power control device is configured to acquire a state of charge of the battery when the power reception device is connected to the trolley overhead wire and calculate, based on the state of charge, allocations of the charging power and the traveling power with respect to received power of the power reception device within a range in which a total of the charging power and the traveling power does not exceed a rated capacity of the power reception device. The power control device is configured to control the battery control device and the motor control device such that the allocated powers are supplied from the power reception device to the battery and the electric motor.

### Advantageous Effects of Invention

With one aspect of the present disclosure described above, a work vehicle with which it is possible to suppress an increase in the size and weight of a power reception device that supplies power supplied from a trolley overhead wire to a battery and an electric motor and to improve the efficiency of work including transportation work can be provided.

### Brief Description of Drawings

Fig. 1 is a perspective view illustrating Embodiment 1 of a work vehicle according to the present disclosure.
Fig. 2 is a schematic circuit diagram of the work vehicle in Fig. 1.
Fig. 3 is a schematic diagram illustrating an exemplary configuration of a battery constituting the circuit in Fig. 2.
Fig. 4 is a function block diagram of each control device constituting the circuit in Fig. 3.
Fig. 5 is a schematic diagram illustrating one cycle of transportation work by the work vehicle in Fig. 1.
Fig. 6 is a flowchart illustrating an exemplary operation of a power control device in Fig. 4.
Fig. 7 is a graph illustrating the relationship between the state of charge and a charging speed of the battery of the work vehicle of Embodiment 1.
Fig. 8 is a graph illustrating allocations of charging power and traveling power at the charging speed in Fig. 7.
Fig. 9 is a flowchart illustrating an exemplary operation of a power control device of a work vehicle of Embodiment 2.
Fig. 10 is a graph illustrating allocations of charging power and traveling power of a work vehicle of Embodiment 3.
Fig. 11 is a flowchart illustrating an exemplary operation of a power control device of a work vehicle of Embodiment 4.
Fig. 12 is a graph illustrating allocations of charging power and traveling power of the work vehicle of Embodiment 4.

### Description of Embodiments

The following describes embodiments of a work vehicle according to the present disclosure with reference to the drawings.

### [Embodiment 1]

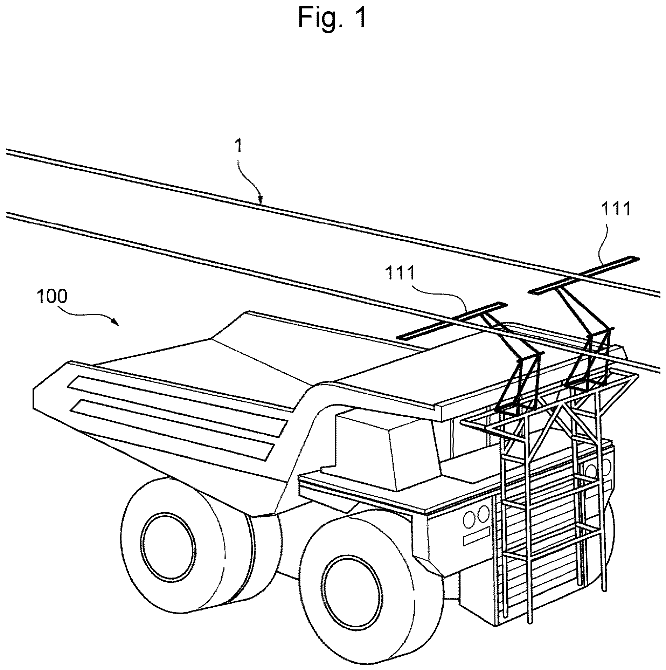

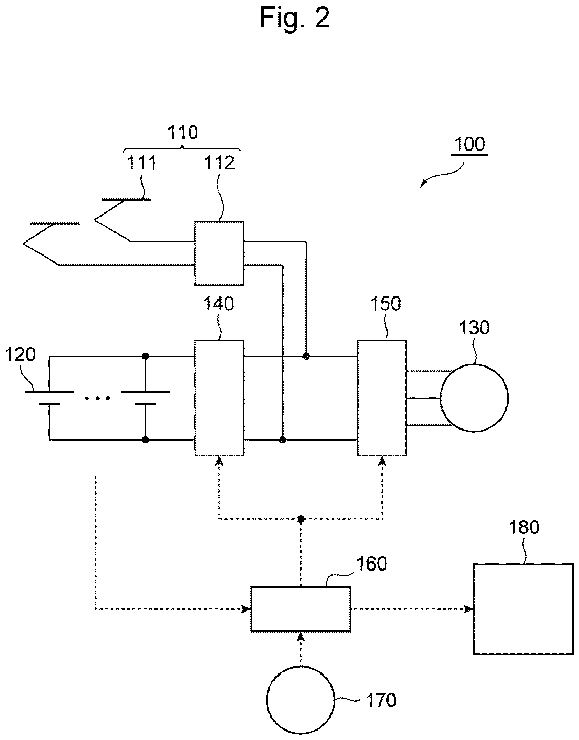

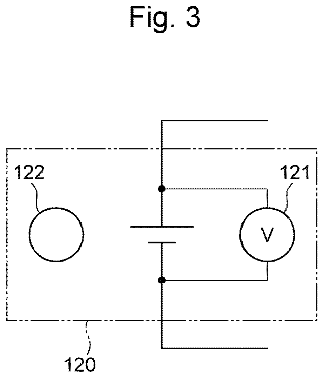

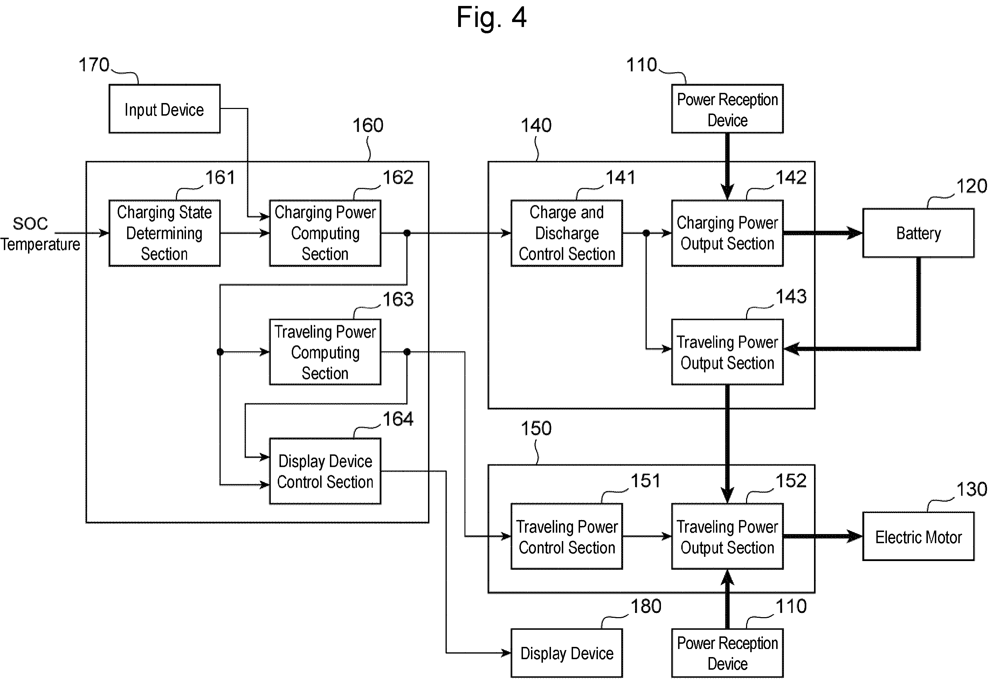

Fig. 1 is a perspective view illustrating Embodiment 1 of a work vehicle according to the present disclosure. Fig. 2 is a schematic circuit diagram of a work vehicle 100 in Fig. 1. Fig. 3 is a schematic diagram illustrating an exemplary configuration of a battery 120 of the work vehicle 100 in Fig. 2. Fig. 4 is a function block diagram of each control device constituting the circuit in Fig. 3. The work vehicle 100 of the embodiment includes, for example, as illustrated in Fig. 2, a power reception device 110, the battery 120, and an electric motor 130.

The work vehicle 100 of this embodiment is, for example, a dump truck that conducts transportation work in mines, construction sites, and the like. More specifically, the work vehicle 100 is, for example, a trolley power-receiving type engineless and fully electric rigid dump truck. That is, the work vehicle 100 is not equipped with an engine or a generator, is supplied with power from trolley overhead wires 1 to charge the battery 120, and travels by driving the electric motor 130 by power supplied from at least one of the trolley overhead wires 1 or the battery 120.

In addition, the work vehicle 100 of the embodiment includes, for example, as illustrated in Fig. 2, a battery control device 140, a motor control device 150, and a power control device 160. The work vehicle 100 may also include, for example, an input device 170 and a display device 180.

The power reception device 110 has, for example, current collectors 111 and a power reception control section 112. For example, the current collectors 111 are disposed to be able to move up and down by operating an up-and-down switch disposed in a cab of the work vehicle 100 by an operator and come into contact with the trolley overhead wires 1 when they move up, thereby being supplied with power from the trolley overhead wires 1.

The power reception control section 112, for example, supplies the power supplied from the trolley overhead wires 1 via the current collectors 111 to the battery control device 140 and the motor control device 150. The power reception control section 112 includes, for example, electrical devices, such as a transformer and a switching element, and control devices, such as an electronic control device (ECU), and has a predetermined rated capacity. The power reception control section 112, for example, controls the power supplied from the current collectors 111 to the battery control device 140 and the motor control device 150.

The battery 120 is a secondary battery that is charged by the power supplied from the power reception device 110. For example, the battery 120 is constituted of a plurality of single cells. More specifically, for example, a battery module is configured by connecting the plurality of single cells in series. Further, a battery pack is configured by connecting a plurality of battery modules in series and/or in parallel. One or more battery packs can constitute the battery 120. For example, lead-acid batteries, lithium-ion secondary batteries, or all-solid-state batteries can be used as the single cells.

The battery 120 includes, for example, as illustrated in Fig. 3, a charging state monitor 121 and a battery state monitor 122. For example, the battery state monitor 122 detects the state, including temperature, of at least one of the individual single cells, battery modules, or battery packs and outputs it to the power control device 160.

For example, the charging state monitor 121 acquires the state of charge (SOC) of at least one of the individual single cells, battery modules, or battery packs of the battery 120 and outputs it to the power control device 160. More specifically, the charging state monitor 121 detects a voltage of at least one of the individual single cells, battery modules, or battery packs of the battery 120 and calculates the SOC of at least one of the individual single cells, battery modules, or battery packs.

The electric motor 130 is, for example, a motor for traveling driven by the power supplied from the power reception device 110 or the battery 120. For example, the electric motor 130 is controlled to rotate by the motor control device 150 and transmits driving force via a transmission to rotate driving wheels of the work vehicle 100, thereby causing the work vehicle 100 to travel. The work vehicle 100 may include only one electric motor 130 or may include a plurality of electric motors 130.

The battery control device 140 performs charge and discharge control of the battery 120. When the power reception device 110 is connected to the trolley overhead wires 1, the battery control device 140 controls charging power supplied from the power reception device 110 to the battery 120. In addition, the battery control device 140, for example, controls traveling power supplied from the battery 120 to the motor control device 150. That is, the battery control device 140 controls the charge of the battery 120 by the power supplied from the power reception device 110 to the battery 120 and the discharge of the battery 120, which supplies the power stored in the battery 120 to the motor control device 150.

The battery control device 140 includes, for example, a circuit that switches the supply and cutoff of the power from the power reception device 110 to the battery 120 and a circuit that switches the supply and cutoff of the power from the battery 120 to the motor control device 150. In addition, the battery control device 140 includes, for example, electrical devices that raise or lower the voltage to a voltage suitable for the supply to the battery control device 140 or the charge of the battery 120 or that suppress voltage fluctuations, and ECUs that control these electrical devices and the above-described circuits. For example, the battery control device 140 controls the charging power supplied from the power reception device 110 to the battery 120 by controlling at least one of the voltage or the current.

Further, for example, as illustrated in Fig. 4, the battery control device 140 has a charge and discharge control section 141, a charging power output section 142, and a traveling power output section 143. Each of these sections of the battery control device 140 represents, for example, each function of the battery control device 140 achieved by executing a program stored in memory by a central processing unit (CPU) of an ECU that constitutes the battery control device 140. The operation of each of these sections of the battery control device 140 will be described later.

The motor control device 150 performs driving control of the electric motor 130. When the power reception device 110 is connected to the trolley overhead wires 1, the motor control device 150 controls the driving of the electric motor 130 by controlling the traveling power supplied from the power reception device 110 to the electric motor 130. In addition, the motor control device 150 controls the driving of the electric motor 130, for example, by controlling the traveling power supplied from the battery 120 through the battery control device 140 to the electric motor 130. The motor control device 150 controls the traveling performance of the work vehicle 100 by, for example, controlling the output torque and rotational speed of the electric motor 130. When the work vehicle 100 includes a plurality of electric motors 130, the motor control device 150 may be disposed for each of the electric motors 130.

Additionally, for example, as illustrated in Fig. 4, the motor control device 150 has a traveling power control section 151 and a traveling power output section 152. Each of these sections of the motor control device 150 represents, for example, each function of the motor control device 150 achieved by executing a program stored in memory by the CPU of an ECU that constitutes the motor control device 150. The operation of each of these sections of the motor control device 150 will be described later.

The power control device 160 controls the battery control device 140 and the motor control device 150 such that, for example, the total of the charging power supplied from the power reception device 110 to the battery 120 and the traveling power supplied from the power reception device 110 to the electric motor 130 does not exceed a predetermined upper-limit power. For example, the predetermined upper-limit power can be set so as not to exceed the rated capacity of the power reception device 110. Specifically, the power control device 160 acquires the state of charge of the battery 120 when the power reception device 110 is connected to the trolley overhead wires 1. Then, based on the state of charge, the power control device 160 calculates allocations of the charging power and the traveling power with respect to the received power of the power reception device 110 within a range in which the total of the charging power and the traveling power does not exceed the rated capacity of the power reception device 110. The power control device 160 then controls the battery control device 140 and the motor control device 150 such that the allocated powers are supplied from the power reception device 110 to the battery 120 and the electric motor 130.

In the work vehicle 100 of this embodiment, the power control device 160 causes the battery control device 140 to stop supplying the charging power, for example, when the SOC acquired from the charging state monitor 121 of the battery 120 is a fully charged state. In this case, the power control device 160 causes the motor control device 150 to increase the traveling power, for example, up to the rated capacity of the power reception device 110 as an upper limit.

In addition, for example, as illustrated in Fig. 4, the power control device 160 has a charging state determining section 161, a charging power computing section 162, a traveling power computing section 163, and a display device control section 164. Each of these sections of the power control device 160 represents, for example, each function of the power control device 160 achieved by executing a program stored in memory by the CPU of an ECU that constitutes the power control device 160. The operation of each of these sections of the power control device 160 will be described later.

The input device 170 is, for example, a human machine interface (HMI) configured to input a set charging speed of the battery 120. More specifically, the input device 170 can be constituted of, for example, a touch panel, keyboard, or the like installed in the cab of the work vehicle 100. For example, the input device 170 accepts the input of the set charging speed of the battery 120 by the operator of the work vehicle 100 and outputs the input set charging speed of the battery 120 to the power control device 160.

The display device 180 can be constituted of, for example, a display meter, liquid crystal display device, organic EL display device, head-up display, or the like installed in the cab of the work vehicle 100. For example, the display device 180 receives from the power control device 160 information on the allocations of the charging power supplied from the power reception device 110 to the battery 120 and the traveling power supplied from the power reception device 110 to the electric motor 130. The display device 180, for example, displays the information on the allocations of the charging power and the traveling power received from the power control device 160 and notifies the operator of the work vehicle 100.

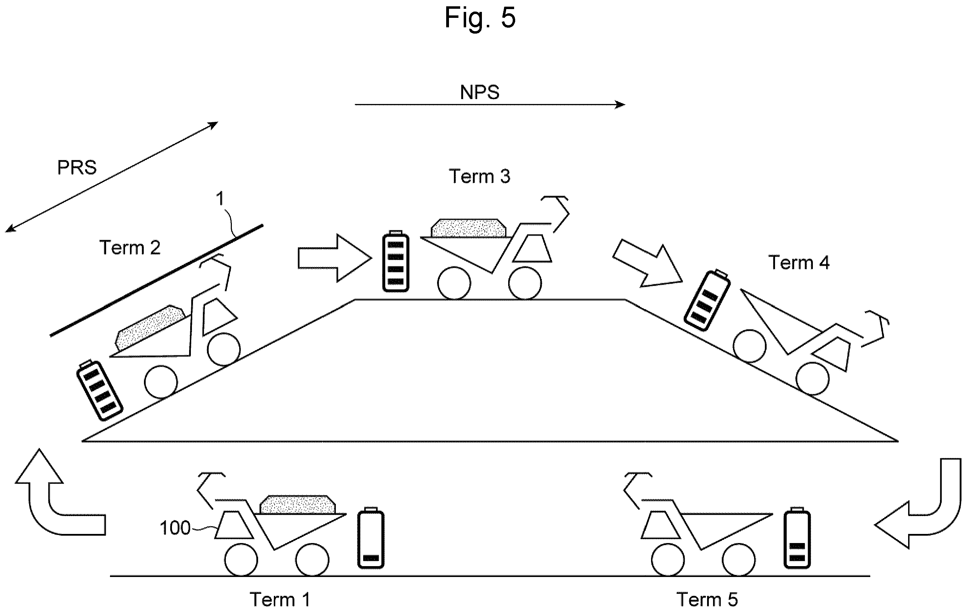

Fig. 5 is a schematic diagram illustrating one cycle of transportation work by the work vehicle 100 in Fig. 1. For example, as described above, the work vehicle 100 of this embodiment is a trolley power-receiving type fully electric rigid dump truck that conducts transportation work of loads, such as ores, earth, and sand, in mines, construction sites, and the like. For example, the work vehicle 100 is loaded with loads, such as ores, earth, and sand, into its body or vessel by a loading machine, such as a hydraulic excavator or wheel loader (Term 1).

For example, in a non-powered zone NPS from a dumping site where loads are unloaded to a loading site where loads are loaded, the work vehicle 100 travels by driving the electric motor 130 by the power stored in the battery 120. Therefore, the SOC of the battery 120 of the work vehicle 100 is in the lowest state in one cycle, for example, at the loading site. Then, for example, the work vehicle 100 travels through a power receiving zone PRS where the trolley overhead wires 1 are installed (Term 2).

In the power receiving zone PRS, the operator of the work vehicle 100, for example, performs an operation to raise the current collectors 111 to bring them into contact with the trolley overhead wires 1. Accordingly, power is supplied from the trolley overhead wires 1 to the battery 120 via the power reception device 110 and the battery control device 140 to charge the battery 120. In addition, power is supplied from the trolley overhead wires 1 to the electric motor 130 via the power reception device 110 and the motor control device 150 to drive the electric motor 130, causing the work vehicle 100 to travel.

The power receiving zone PRS is set in a zone with a high traveling load, for example, an uphill where the work vehicle 100 travels with loads fully loaded. At the ending point of the power receiving zone PRS, the SOC of the battery 120 of the work vehicle 100 becomes maximum, for example, in one cycle of the work vehicle 100 illustrated in Fig. 5. Then, for example, the work vehicle 100 travels through a non-powered zone NPS where the trolley overhead wires 1 are not installed, to a dumping site and raises a front end portion of the body or vessel to dump the loads (Term 3).

Then, the work vehicle 100 travels downhill in a non-powered zone NPS, for example, in an empty load state where loads are not loaded on the body or vessel (Term 4) and further travels on a flat route in the non-powered zone NPS from the downhill to the loading site (Term 5). In the non-powered zone NPS, the work vehicle 100 travels by driving the electric motor 130 by the power supplied from the battery 120 to the electric motor 130 via the battery control device 140 and the motor control device 150. As a result, the SOC of the battery 120 peaks at the ending point of the power receiving zone PRS and gradually decreases.

Then, the work vehicle 100 is loaded with loads into its body or vessel again at the loading site (Term 1) and travels through the power receiving zone PRS, thereby increasing the SOC of the battery 120. Thus, with a trolley power-receiving type fully electric rigid dump truck such as the work vehicle 100 of this embodiment, it is possible to avoid stopping at a charging station for the purpose of charging the battery 120 by appropriately setting the power receiving zone PRS in one cycle of a traveling route. Accordingly, it is possible to improve the efficiency of work of the work vehicle 100, such as transportation work of loads.

On the contrary, with a fully electric rigid dump truck that is not equipped with an engine or a generator, such as the work vehicle 100 of this embodiment, both the charging power for charging the battery 120 and the traveling power for driving the electric motor 130 need to be supplied in the power receiving zone PRS from the trolley overhead wires 1 via the power reception device 110. Therefore, in order to improve productivity by improving the traveling performance of the work vehicle 100 more in the power receiving zone PRS than in the non-powered zone NPS, in addition to the charging power, it is necessary to supply the traveling power, which has been supplied from the battery 120 in the non-powered zone NPS, and additional traveling power for improving the traveling performance from the trolley overhead wires 1 via the power reception device 110.

Here, it is assumed that the charging power in the power receiving zone PRS and the additional traveling power for improving the traveling performance of the work vehicle 100 are each equal to the traveling power supplied from the battery 120 to the electric motor 130 in the non-powered zone NPS. In addition, it is assumed that traveling power generated by an engine and a generator in a conventional electric dump truck is equal to the traveling power supplied from the battery 120 in the work vehicle 100 of this embodiment. Furthermore, it is assumed that additional traveling power supplied from a trolley overhead wire for improving the traveling performance of the conventional electric dump truck is equal to the traveling power generated by the engine and the generator.

In this case, the work vehicle 100 of this embodiment is supplied with three times the power from the trolley overhead wires 1 compared with the conventional electric dump truck equipped with an engine and a generator. Thus, as the power supplied from the trolley overhead wires 1 increases, it is necessary to increase the rated capacity of the electrical devices used for the power reception device 110, possibly causing the power reception device 110 to increase in size and weight.

When the weight of the power reception device 110 increases, the weight of loads that can be loaded on the body or vessel of the work vehicle 100 may be reduced, and the efficiency of work per cycle of the transportation work of the work vehicle 100 may be reduced. Therefore, with the configuration described below, the work vehicle 100 of this embodiment suppresses an increase in the size and weight of the power reception device 110 that supplies the power supplied from the trolley overhead wires 1 to the battery 120 and the electric motor 130 and improves the efficiency of work including transportation work by the work vehicle 100.

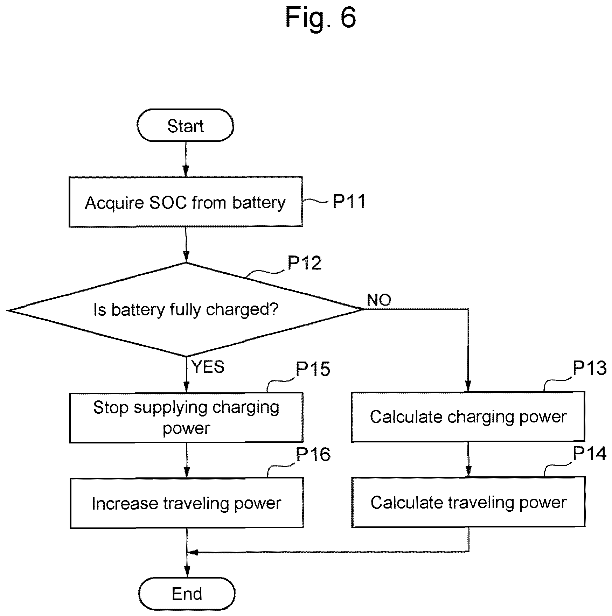

Fig. 6 is a flowchart illustrating an exemplary operation of the power control device 160 in Fig. 4 in the power receiving zone PRS, where the work vehicle 100 is supplied with power from the trolley overhead wires 1. When the power control device 160 starts the processing flow illustrated in Fig. 6, it first executes Process P11 for acquiring the SOC from the battery 120. In this Process P11, for example, as illustrated in Fig. 2 to Fig. 4, the power control device 160 causes the charging state determining section 161 to acquire the SOC of the battery 120 from the charging state monitor 121 of the battery 120. In addition, for example, the charging power computing section 162 may acquire the state of the battery 120, including the temperature, from the battery state monitor 122 of the battery 120.

Next, the power control device 160 executes Process P12 for determination illustrated in Fig. 6. In this Process P12, the charging state determining section 161 of the power control device 160 illustrated in Fig. 4 determines whether or not the battery 120 is in a fully charged state based on the SOC acquired from the battery 120. In this Process P12, for example, when the charging state determining section 161 determines that the battery 120 is not in the fully charged state (NO), the power control device 160 executes Process P13 for calculating charging power.

In this Process P13, for example, the charging power computing section 162 calculates the charging power for charging the battery 120 at a preset charging speed based on the determination result of the charging state determining section 161 and outputs it to the battery control device 140. The charging power computing section 162 may, for example, calculate the charging power for charging the battery 120 at a constant charging speed until the SOC of the battery 120 reaches the fully charged state of 100%, or it may calculate the charging power so as to vary the charging speed depending on the SOC of the battery 120.

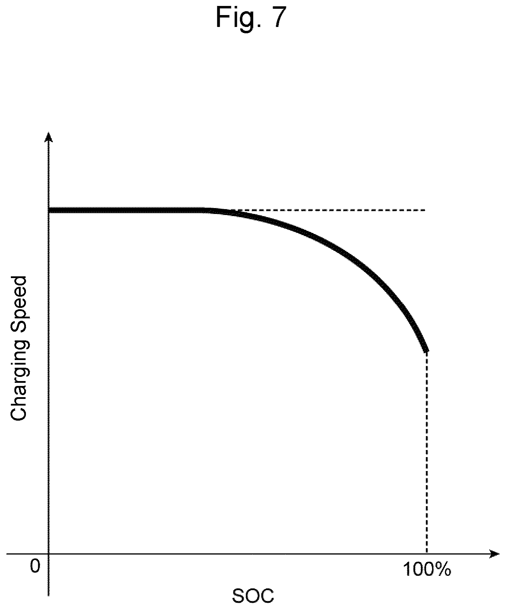

Fig. 7 is a graph illustrating the relationship between the state of charge (SOC) and the charging speed of the battery 120 of the work vehicle 100 of Embodiment 1. In the example illustrated in Fig. 7, for example, the charging power computing section 162 calculates the charging power for charging the battery 120 at the upper-limit charging speed until the SOC acquired from the battery 120 exceeds a predetermined threshold. In addition, for example, once the SOC acquired from the battery 120 exceeds a predetermined threshold, the charging power computing section 162 calculates the charging power so as to reduce the charging speed of the battery 120 as the SOC approaches the fully charged state of 100%.

Then, for example, the power control device 160 executes Process P14 for calculating traveling power illustrated in Fig. 6. In this Process P14, for example, based on the charging power calculated by the charging power computing section 162, the traveling power computing section 163 calculates the traveling power such that the total of the charging power and the traveling power does not exceed the rated capacity of the power reception device 110 and outputs it to the motor control device 150. In addition, for example, based on the charging power calculated by the charging power computing section 162 and the traveling power calculated by the traveling power computing section 163, the display device control section 164 generates information to display an image indicating their allocations and outputs it to the display device 180.

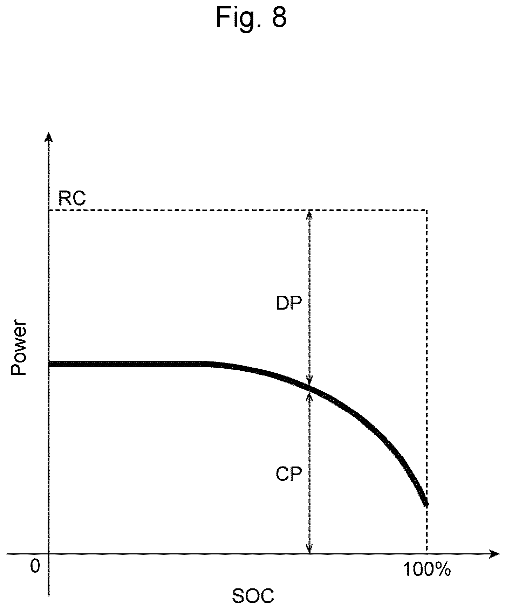

Fig. 8 is a graph illustrating the allocations of charging power CP and traveling power DP at the charging speed in Fig. 7. In the example illustrated in Fig. 8, the traveling power computing section 163 calculates the traveling power DP such that the total of the charging power CP and the traveling power DP does not exceed a rated capacity RC of the power reception device 110. In addition, for example, when the SOC acquired from the battery 120 exceeds a predetermined threshold and the charging power computing section 162 reduces the charging power CP, the traveling power computing section 163 increases the traveling power DP by the amount by which the charging power CP is reduced. Afterwards, the power control device 160 resumes the processing flow illustrated in Fig. 6 after ending it and repeats it at a predetermined cycle.

On the other hand, in Process P12 described above, for example, when the charging state determining section 161 determines that the battery 120 is in the fully charged state (YES), the power control device 160 executes Process P15 for stopping the supply of the charging power. Then, the power control device 160 executes Process P16 illustrated in Fig. 6. In this Process P16, the charging power computing section 162 of the power control device 160 increases the traveling power DP, for example, up to the rated capacity RC of the power reception device 110 as an upper limit. Afterwards, the power control device 160 resumes the processing flow illustrated in Fig. 6 after ending it and repeats it at a predetermined cycle.

For example, a value of the charging power CP calculated by the power control device 160 in the processing flow illustrated in Fig. 6 is input to the charge and discharge control section 141 of the battery control device 140 illustrated in Fig. 4. The charge and discharge control section 141 controls, for example, the charging power CP output from the power reception device 110 to the battery 120 via the charging power output section 142, based on the input value of the charging power CP. Accordingly, in the power receiving zone PRS, the battery 120 of the work vehicle 100 is charged by the charging power CP calculated by the power control device 160 and supplied from the trolley overhead wires 1 via the power reception device 110 and the battery control device 140.

For example, a value of the traveling power DP calculated by the power control device 160 in the processing flow illustrated in Fig. 6 is input to the traveling power control section 151 of the motor control device 150 illustrated in Fig. 4. The traveling power control section 151 controls, for example, the traveling power DP output from the power reception device 110 to the electric motor 130 via the traveling power output section 152, based on the input value of the traveling power DP.

Accordingly, in the power receiving zone PRS, the electric motor 130 of the work vehicle 100 is driven by the traveling power DP calculated by the power control device 160 and supplied from the trolley overhead wires 1 via the power reception device 110 and the motor control device 150. In addition, the display device 180 displays the allocations of the charging power CP and the traveling power DP based on the information input from the display device control section 164 of the power control device 160.

In the non-powered zone NPS, the charging power computing section 162 of the power control device 160 outputs, for example, a command to the battery control device 140 to stop supplying the charging power CP. In addition, for example, the traveling power computing section 163 of the power control device 160 calculates the traveling power supplied from the battery 120 based on the command output from the charging power computing section 162 and outputs it to the motor control device 150.

Additionally, for example, based on the command output from the charging power computing section 162 and the traveling power calculated by the traveling power computing section 163, the display device control section 164 of the power control device 160 generates information to indicate that the work vehicle 100 travels on the traveling power supplied from the battery 120 and outputs it to the display device 180.

Further, in the non-powered zone NPS, the charge and discharge control section 141 of the battery control device 140 controls, for example, the traveling power output section 143 based on the command input from the charging power computing section 162 and supplies power from the battery 120 to the traveling power output section 152 of the motor control device 150. For example, the traveling power control section 151 of the motor control device 150 controls the traveling power output section 152 based on the value of the traveling power input from the traveling power computing section 163 of the power control device 160. Accordingly, the traveling power supplied from the battery 120 via the traveling power output section 143 is supplied to the electric motor 130 via the traveling power output section 152.

As a result, in the non-powered zone NPS, the electric motor 130 of the work vehicle 100 is driven by the traveling power calculated by the power control device 160 and supplied from the battery 120 via the battery control device 140 and the motor control device 150. In addition, the display device 180 displays, for example, traveling on the traveling power supplied from the battery 120, based on the information input from the display device control section 164 of the power control device 160.

As described above, the work vehicle 100 of this embodiment includes the power reception device 110 supplied with power from the trolley overhead wires 1 by being connected to the trolley overhead wires 1, the battery 120 charged by power supplied from the power reception device 110, and the electric motor 130 for traveling driven by power supplied from the power reception device 110 or the battery 120. In addition, the work vehicle 100 includes the battery control device 140, the motor control device 150, and the power control device 160. The battery control device 140 performs charge and discharge control of the battery 120 and supplies the charging power CP from the power reception device 110 to the battery 120 when the power reception device 110 is connected to the trolley overhead wires 1. The motor control device 150 performs driving control of the electric motor 130 and supplies the traveling power DP from the power reception device 110 to the electric motor 130 when the power reception device 110 is connected to the trolley overhead wires 1. When the power reception device 110 is connected to the trolley overhead wires 1, the power control device 160 acquires the state of charge of the battery 120 and calculates, based on the state of charge, the allocations of the charging power CP and the traveling power DP with respect to the received power of the power reception device 110 within a range in which the total of the charging power CP and the traveling power DP does not exceed the rated capacity RC of the power reception device 110. The power control device 160 then controls the battery control device 140 and the motor control device 150 such that the allocated powers are supplied from the power reception device 110 to the battery 120 and the electric motor 130.

With the configuration, the work vehicle 100 of this embodiment allows the total of the charging power CP and the traveling power DP supplied from the trolley overhead wires 1 to the battery 120 and the electric motor 130, respectively, to be limited to being equal to or less than the rated capacity RC of the power reception device 110. As a result, the increase in the size and weight of the power reception device 110 can be suppressed, the weight of loads loaded on the work vehicle 100 can be increased, the efficiency of work, such as transportation work, of the work vehicle 100 can be improved, and the productivity of mines and construction sites can be improved.

In particular, the work vehicle 100 such as a dump truck that conducts conveyance work in mines and construction sites repeats the cycle illustrated in Fig. 5 almost all day. Therefore, suppressing the weight of the power reception device 110 even a little and increasing the weight of loads loaded on the work vehicle 100 even a little have a large impact on productivity improvement from the viewpoint of the period, such as a day or a month. Accordingly, with the work vehicle 100 of this embodiment, the productivity in mines, construction sites, and the like can be significantly improved.

In addition, in the work vehicle 100 of this embodiment, the power control device 160 causes the battery control device 140 to stop supplying the charging power when the state of charge (SOC) acquired from the battery 120 is a fully charged state and causes the motor control device 150 to increase the traveling power up to the above-described rated capacity RC as an upper limit.

With the configuration, in the power receiving zone PRS where the trolley overhead wires 1 are installed, when the SOC of the battery 120 is a fully charged state, the traveling performance of the work vehicle 100 can be improved by supplying more traveling power from the trolley overhead wires 1 to the electric motor 130 of the work vehicle 100. More specifically, it becomes possible to improve the hill-climbing performance of the work vehicle 100 and increase traveling speed, thereby shortening the time required for one cycle as illustrated in Fig. 5. Accordingly, with the work vehicle 100 of this embodiment, the efficiency of work, such as transportation work, can be further improved.

In addition, in the work vehicle 100 of this embodiment, the power control device 160 causes the battery control device 140 to reduce the charging power as the state of charge (SOC) acquired from the battery 120 approaches the fully charged state and causes the motor control device 150 to increase the traveling power by the amount by which the charging power is reduced.

With the configuration, for example, when the SOC of the battery 120 does not decrease significantly during one cycle of transportation work of the work vehicle 100, more power supplied from the trolley overhead wires 1 can be allocated to the traveling power. As a result, the traveling performance of the work vehicle 100 can be improved more in the power receiving zone PRS, further improving the productivity of the work vehicle 100.

As described above, with this embodiment, the work vehicle 100 with which it is possible to suppress an increase in the size and weight of the power reception device 110 that supplies power supplied from the trolley overhead wires 1 to the battery 120 and the electric motor 130 and to improve the efficiency of work including transportation work can be provided.

### [Embodiment 2]

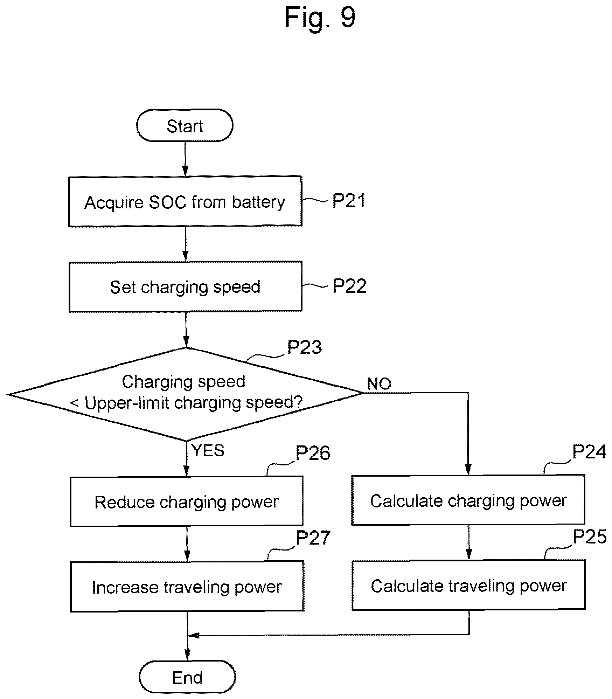

The following describes Embodiment 2 of the work vehicle according to the present disclosure with reference to Fig. 9 by incorporating Fig. 1 to Fig. 5. Fig. 9 is a flowchart illustrating an exemplary operation of the power control device 160 of the work vehicle 100 of Embodiment 2. In the work vehicle 100 of this embodiment, when the power control device 160 starts the processing flow illustrated in Fig. 9, it executes Process P21 for acquiring the SOC from the battery 120, similarly to Embodiment 1 described above.

Next, the power control device 160 executes, for example, Process P22 for setting a charging speed. In this Process P22, for example, the charging state determining section 161 sets a charging speed based on a transition of the SOC for one cycle input from the battery 120. For example, when the SOC of the battery 120 transitions between a relatively high 70% and 100%, the charging state determining section 161 sets a charging speed lower than the upper-limit charging speed of the battery 120. On the other hand, for example, when the SOC of the battery 120 transitions between a relatively low 10% and 60%, the charging state determining section 161 sets a charging speed to the upper-limit charging speed of the battery 120.

Next, the power control device 160 executes, for example, Process P23 for determination illustrated in Fig. 9. In this Process P23, for example, the charging power computing section 162 determines whether or not the charging speed set by the charging state determining section 161 is less than the upper-limit charging speed of the battery 120. In this Process P23, when the charging power computing section 162 determines that the set charging speed is the upper-limit charging speed of the battery 120 (NO), it executes Process P24 for calculating the charging power according to the upper-limit charging speed. Then, the traveling power computing section 163 executes Process P25 for calculating the traveling power based on the charging power calculated by the charging power computing section 162. Afterwards, the power control device 160 resumes the processing flow illustrated in Fig. 9 after ending it and repeats it at a predetermined cycle.

On the other hand, in Process P23 described above, when the charging power computing section 162 determines that the set charging speed is less than the upper-limit charging speed of the battery 120 (YES), it executes Process P26 for reducing the charging power of the battery 120 according to the set charging speed. In addition, the traveling power computing section 163 executes Process P27 for increasing the traveling power by the amount by which the charging power computing section 162 reduces the charging power.

With the configuration, the work vehicle 100 of this embodiment allows both the improvement in traveling performance and the charge of the battery 120 to be achieved at the same time while allowing the total of the charging power and the traveling power supplied from the trolley overhead wires 1 to the battery control device 140 and the motor control device 150, respectively, via the power reception device 110 to be constant.

### [Embodiment 3]

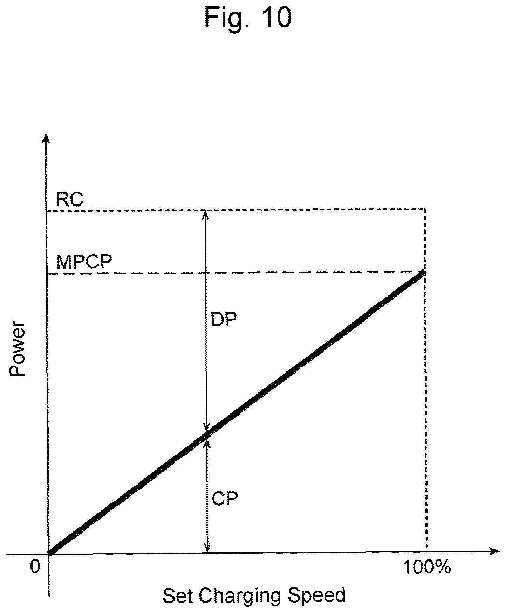

The following describes Embodiment 3 of the work vehicle according to the present disclosure with reference to Fig. 10 by incorporating Fig. 1 to Fig. 5. Fig. 10 is a graph illustrating the allocations of the charging power CP and the traveling power DP of the work vehicle 100 of Embodiment 3. While the example illustrated in Fig. 10 shows a case where a maximum chargeable power MPCP of the battery 120 is lower than the rated capacity RC of the power reception device 110, the maximum chargeable power MPCP may be consistent with the rated capacity RC.

As illustrated in Fig. 2 and Fig. 4, the work vehicle 100 of this embodiment includes the input device 170 configured to input the set charging speed of the battery 120. For example, the operator of the work vehicle 100 refers to the SOC of the battery 120 displayed on the display device 180 and inputs a set charging speed lower than the normal charging speed into the input device 170 when the SOC of the battery 120 in one cycle has a margin.

As illustrated in Fig. 4, the input device 170 outputs the set charging speed input by the operator to, for example, the charging power computing section 162 of the power control device 160. For example, as illustrated in Fig. 10, the charging power computing section 162 calculates the charging power CP based on the allocations of the charging power CP and the traveling power DP, which are preset and stored in memory, according to the set charging speed and outputs it to the battery control device 140. Accordingly, the battery control device 140 supplies the battery 120 with the charging power CP according to the set charging speed acquired by the power control device 160 from the input device 170.

For example, as illustrated in Fig. 10, the traveling power computing section 163 calculates the traveling power DP based on the charging power CP calculated by the charging power computing section 162 and the rated capacity RC of the power reception device 110 and outputs it to the motor control device 150. Accordingly, the motor control device 150 supplies the electric motor 130 with, for example, the traveling power DP that is a difference between the rated capacity RC and the charging power CP. In addition, for example, based on the charging power CP calculated by the charging power computing section 162 and the traveling power DP calculated by the traveling power computing section 163, the display device control section 164 generates a signal to display the allocations and the set charging speed and outputs it to the display device 180.

As described above, the work vehicle 100 of this embodiment further includes the input device 170 configured to input the set charging speed of the battery 120. The power control device 160 causes the battery control device 140 to supply charging power according to the set charging speed acquired from the input device 170. In addition, the power control device 160 causes the motor control device 150 to supply the traveling power DP that is the difference between the rated capacity RC of the power reception device 110 and the charging power CP.

With the configuration, the work vehicle 100 of this embodiment allows the operator to input a lower-than-normal set charging speed into the input device 170 when, for example, the SOC of the battery 120 has a margin of the amount of power consumed in one cycle of traveling by the work vehicle 100. As a result, the allocation of the charging power CP supplied to the battery 120 can be reduced, and the allocation of the traveling power DP supplied to the electric motor 130 can be increased.

Accordingly, the traveling performance of the work vehicle 100 can be improved, the efficiency of work by the work vehicle 100 can be improved, and productivity can be improved. In addition, the operator of the work vehicle 100 can check the allocations of the charging power CP and the traveling power DP, the set charging speed, the SOC of the battery 120, and the like, which are displayed on the display device 180. The operator of the work vehicle 100 can also increase the allocations of the charging power CP by inputting a higher-than-normal set charging speed into the input device 170 when the SOC of the battery 120 is low with respect to the amount of power consumed in one cycle of traveling by the work vehicle 100.

### [Embodiment 4]

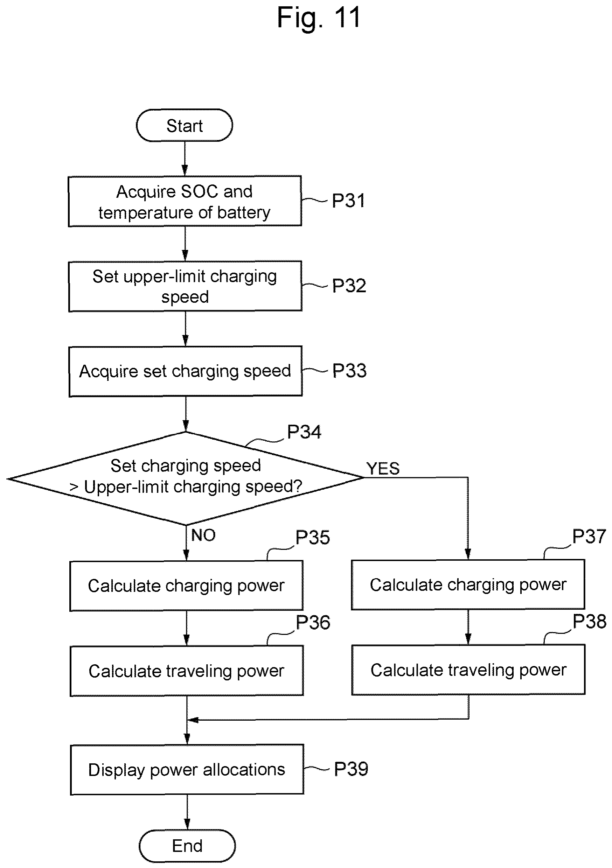

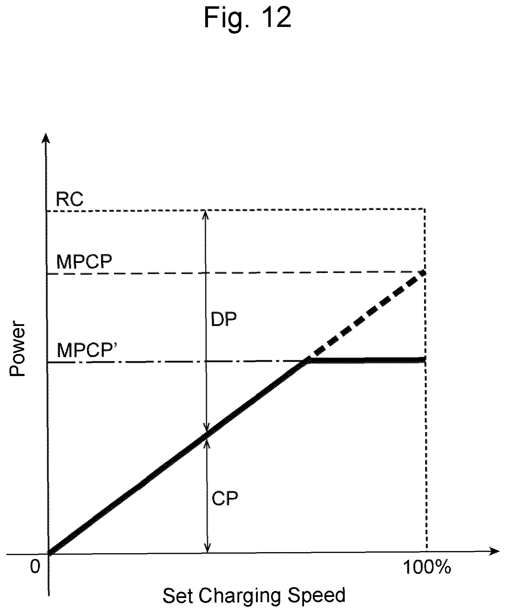

The following describes Embodiment 4 of the work vehicle according to the present disclosure with reference to Fig. 11 and Fig. 12 by incorporating Fig. 1 to Fig. 5. Fig. 11 is a flowchart illustrating an exemplary operation of the power control device 160 of the work vehicle 100 of Embodiment 4. Fig. 12 is a graph illustrating the allocations of the charging power CP and the traveling power DP of the work vehicle 100 of Embodiment 4. The maximum chargeable speed of the battery 120 may be reduced, for example, depending on the SOC and the state, such as the temperature.

In the work vehicle 100 of this embodiment, when the power control device 160 starts the processing flow illustrated in Fig. 11, it first executes Process P31 for causing the charging state determining section 161 to acquire the SOC of the battery 120 and the state of the battery 120, including the temperature. Furthermore, for example, the power control device 160 executes Process P32 for causing the charging power computing section 162 to set the upper-limit charging speed that does not exceed the maximum chargeable speed based on the SOC and the state, such as the temperature, of the battery 120.

Then, for example, the power control device 160 executes Process P33 for causing the charging power computing section 162 to acquire the set charging speed input by the operator from the input device 170 and Process P34 for causing the charging power computing section 162 to determine whether or not the acquired set charging speed exceeds the upper-limit charging speed. In this Process P34, for example, when the charging power computing section 162 determines that the set charging speed does not exceed the upper-limit charging speed (NO), it executes the next Process P35.

In this Process P35, for example, as illustrated in Fig. 12, the charging power computing section 162 calculates the charging power CP based on the allocations of the charging power CP and the traveling power DP, which are preset according to the normal maximum chargeable power MPCP and the set charging speed of the battery 120 and outputs it to the battery control device 140. Then, the traveling power computing section 163 executes Process P36 for calculating the traveling power DP based on the charging power CP and the rated capacity RC of the power reception device 110 and outputting it to the motor control device 150.

On the other hand, in Process P34 described above, when the charging power computing section 162 determines that the set charging speed exceeds the upper-limit charging speed (YES), it executes the next Process P37. In this Process P37, for example, as illustrated in Fig. 12, the charging power computing section 162 calculates a maximum chargeable power MPCP' of the battery 120, which is reduced according to the decrease in the upper-limit charging speed, as the charging power CP. Then, the traveling power computing section 163 executes Process P38 for calculating the traveling power DP based on the charging power CP and the power reception device 110 and outputting it to the motor control device 150.

Afterwards, the power control device 160 executes Process P39 for causing the display device control section 164 to generate information to display the allocations of the charging power CP and the traveling power DP and to output it to the display device 180 to display and ends the processing flow illustrated in Fig. 11.

As described above, in the work vehicle 100 of this embodiment, the power control device 160 causes the battery control device 140 to supply the charging power CP according to the smaller of the upper-limit charging speed and the set charging speed of the battery 120. With the configuration, the charging power CP can be freely set within the range of equal to or less than the maximum chargeable power MPCP' depending on the SOC and the state, such as the temperature, of the battery 120, and the traveling power DP can be increased, thereby improving the traveling performance of the work vehicle 100.

While the embodiments of the work vehicle according to the present disclosure have been described in detail using the drawings, the specific configuration is not limited to the embodiments. Design changes and the like within a scope not departing from the gist of the present disclosure are included in the present disclosure.

### Reference Signs List

- 1: Trolley overhead wire
- 100: Work vehicle
- 110: Power reception device
- 120: Battery
- 130: Electric motor
- 140: Battery control device
- 150: Motor control device
- 160: Power control device
- 170: Input device
- CP: Charging power
- RC: Rated capacity

## Claims

1. A work vehicle comprising:
a power reception device configured to be supplied with power from a trolley overhead wire by being connected to the trolley overhead wire;
a battery configured to be charged by the power supplied from the power reception device;
an electric motor for traveling configured to be driven by power supplied from the power reception device or the battery;
a battery control device configured to perform charge and discharge control of the battery and supply charging power from the power reception device to the battery when the power reception device is connected to the trolley overhead wire;
a motor control device configured to perform driving control of the electric motor and supply traveling power from the power reception device to the electric motor when the power reception device is connected to the trolley overhead wire; and
a power control device configured to acquire a state of charge of the battery when the power reception device is connected to the trolley overhead wire and calculate, based on the state of charge, allocations of the charging power and the traveling power with respect to received power of the power reception device within a range in which a total of the charging power and the traveling power does not exceed a rated capacity of the power reception device, the power control device controlling the battery control device and the motor control device such that the allocated powers are supplied from the power reception device to the battery and the electric motor.

2. The work vehicle according to claim 1,
wherein the power control device causes the battery control device to stop supplying the charging power when a state of charge acquired from the battery is a fully charged state and causes the motor control device to increase the traveling power up to the rated capacity as an upper limit.

3. The work vehicle according to claim 1,
wherein the power control device causes the battery control device to reduce the charging power as a state of charge acquired from the battery approaches a fully charged state and causes the motor control device to increase the traveling power by an amount by which the charging power is reduced.

4. The work vehicle according to claim 1, further comprising
an input device configured to input a set charging speed of the battery,
wherein the power control device causes the battery control device to supply the charging power according to the set charging speed acquired from the input device and causes the motor control device to supply the traveling power that is a difference between the rated capacity and the charging power.

5. The work vehicle according to claim 4,
wherein the power control device causes the battery control device to supply the battery with the charging power according to a smaller of a rechargeable upper-limit charging speed and the set charging speed.
